# EUROPÄISCHE PATENTSCHRIFT

(11) **EP 2 576 092 B1**
(45) Veröffentlichungstag und Bekanntmachung des Hinweises auf die Patenterteilung: **07.10.2020**
(21) Anmeldenummer: 11761479.2
(22) Anmeldetag: 20.05.2011
(51) Int. Cl.: B09B 1/00, B01J 20/04, B01J 20/10, B01J 20/28, C04B 111/00, C04B 18/04, C04B 28/02

(54) **GEMISCH, VERWENDUNG DES GEMISCHES UND VERFAHREN ZUR BINDUNG DER RESTFEUCHTE IN DEM RÜCKSTANDSSALZ EINER SALZHALDE.**
MIXTURE, USE OF THE MIXTURE AND METHOD FOR BINDING THE RESIDUAL MOISTURE IN THE SALT RESIDUE OF A SALT HEAP
MÉLANGE ET SON UTILISATION DANS UN PROCÉDÉ POUR LIER L'HUMIDITÉ RÉSIDUELLE DANS LES RESTES DE SEL D'UN DÉPÔT DE SEL

(30) Priorität: 27.05.2010 DE 102010021675
(43) Veröffentlichungstag der Anmeldung: 10.04.2013
(73) Patentinhaber: K+S Minerals and Agriculture GmbH, 34131 Kassel (DE)
(72) Erfinder: PALM, Albrecht, 39579 Garlipp (DE); KIND, Hans-Joachim, 39291 Hohenwarthe (DE); WESTPHAL, Martin, 39326 Wolmirstedt (DE)
(74) Vertreter: Patentanwälte Walther Hinz Bayer PartGmbB
(86) Internationale Anmeldenummer: PCT/DE2011/001125
(87) Internationale Veröffentlichungsnummer: WO 2011/153991

(56) Entgegenhaltungen:
- EP-A2- 0 168 638
- DE-A1- 19 936 324
- US-A- 4 432 666
- US-A1- 2004 245 178

## Beschreibung

Die Erfindung betrifft ein Gemisch aus Rückstandssalz und einem Additiv zur Bindung der Restfeuchte in dem Rückstandssalz zur Verminderung des Anfalls an Haldenwassereiner Salzhalde, wobei das Additiv hydraulisch und/oder puzzloanisch als abbindende Eigenschaften aufweist. Die Erfindung betrifft auch ein Verfahren zur Bindung der Restfeuchte in dem Rückstandssalz einer Salzhalde zur Verminderung des Haldenwasseranteils wie auch die Verwendung eines Gemisches gemäß einem der Ansprüche 1 bis 5 zur Bindung der Restfeuchte in dem Rückstandssalz einer Salzhalde.

Aus der EP 168 638 A2 ist die Herstellung deponierbarer Produkte aus trockenem, größtenteils wasserlöslichen, beim Lösen Wärme entwickelnden, umweltgefährdenden Salzgemischen bekannt, wobei weiterhin bekannt ist, diese Salzgemische mit einem hydraulischen Bindemittel zu versetzen, zu kompaktieren und zu umhüllen. Das heißt, es werden sphärische Formkörper hergestellt, mit einer dicken Bitumenschicht umgeben, sodass von außen einwirkende Feuchtigkeit nicht in der Lage ist, in den Formkörper einzutreten.

Die US 2004/245178 A1 befasst sich zum einen mit einem Gemisch mit Abfallmaterial, insbesondere Abfallsalzen, und zum anderen einem Verfahren zur Behandlung von derartigem Abfallmaterial, Hierbei soll bei den behandelten Abfallsalzen, z. B. Chromsalzen, der Austritt an Schadstoffen, wie insbesondere Schwermetallen, vermieden werden. Dies wird dadurch erreicht, dass neben anderen Stoffen unter anderem ein Hydrophobierungsmittel zugesetzt wird, das mit dem Abfallmaterial vermischt wird. Die Beigabe eines solchen Hydrophobierungsmittels hat zur Folge, dass das Abfallmaterial, also z. B. Chromsalz, bei Kontakt mit Wasser wasserabweisend wird, sodass z. B. Schwermetalle nicht ausgewaschen werden können.

Bei der Verarbeitung von Rohsalzen z. B. zur Kaliherstellung fallen Rückstände an, die im Wesentlichen aus Salz bestehen. Der Rückstand wird, soweit er nicht anders entsorgt wird, aufgehaldet. Um möglichst wenig Grundfläche für eine solche Halde in Anspruch zu nehmen und um den Niederschlägen eine im Verhältnis möglichst kleine Oberfläche zum Volumen der Halde zu bieten, werden die Halden bevorzugt in Kegelstumpfform mit steilen Böschungen angelegt. Das Versickern von Haldenwasser in den Untergrund wird dadurch verhindert, dass viele Halden an der Basis eine Dichtung aufweisen. Die Halden sind üblicherweise von Gräben eingefasst, um das anfallende Haldenwasser zu fassen und geordnet ableiten zu können, wobei die Menge an Haldenwasser unter anderem abhängig ist von der Niederschlagsmenge und der sogenannten Restfeuchte. Das Haldenwasser soll in der anfallenden Menge so gering wie möglich gehalten werden. Insofern sind bereits aus dem Stand der Technik verschiedene Verfahren zur Abdeckung von Halden auch zum Zwecke der Begrünung und Rekultivierung bekannt. Sinn und Zweck einer solchen Abdeckung ist immer eine standsichere Abdeckung mit den unterschiedlichsten Materialien bereitzustellen, die weitestgehend verhindert, das Niederschlagswasser in den Haldenkörper eindringt, dort zu Lösungsvorgängen führt und das Haldenwasser bildet. Sowohl aus der DE-PS 3925953 als auch aus der DE-OS 4117270 und aus der DE-PS 4337730 ist bekannt eine solche Salzhalde abzudecken, um das Eindringen von Niederschlagswasser in die Halde zu vermindern bzw. gänzlich zu unterbinden.

In diesem Zusammenhang ist auch eine Haldenabdeckung bestehend aus hydraulisch und/oder puzzolanisch abgebundenen Gemischen mineralischer Reststoffe als Haldenabdeckung in der DE-PS 19632154 beschrieben. Die Reststoffe umfassen insbesondere Aschen aus der Verbrennung von Klärschlamm, Biomasse, Holz und/oder gipshaltige Reststoffe. Diese Stoffgemische werden in Form einer angefeuchteten Masse in mehreren Schichten beginnend am Haldenfuß auf die Haldenoberfläche aufgebracht und zur Haldeninnenseite zu verdichtet.

Darüber hinaus ist aus der DE 19937270 A1 eine Haldenabdeckung auch für eine Rückstandssalzhalde bekannt, bei der ein rolliges, krümeliges Grüngranulat auf die Halde aufgebracht wird, wobei das Grüngranulat salzhaltige Schlacken aus der Aluminiumherstellung sowie abbindefähige Kraftwerksaschen umfasst.

Wie sich aus dem zuvor erwähnten Stand der Technik ergibt, befasst sich dieser Stand der Technik damit, wie auf die Halde niedergehendes Niederschlagswasser vom Eindringen in die Halde abgehalten werden kann, um so den Haldenwasseranteil durch Niederschlagswasser vermindern zu können. Was nicht berücksichtigt wird, ist allerdings der Restfeuchtegehalt des Rückstandssalzes. Der Restfeuchtegehalt ist abhängig von dem jeweils vorhergehenden Aufbereitungsverfahren. Die wesentlichen Verfahren sind die elektrostatische Trennung als "trockenes" Verfahren, sowie die Flotation und das Heisslöseverfahren, wobei die beiden letztgenannten Verfahren zu unterschiedlichen Restfeuchtegehalten in Rückstandssalz führen. Der Restfeuchtegehalt des zur Aufhaldung bestimmten Rückstandssalzes soll etwa 7 % betragen. Der Grund für den Restfeuchtegehalt in dieser Größenordnung liegt zum einen in den erforderlichen geomechanischen Eigenschaften, und zum anderen darin, dass Staubverfrachtungen beim Aufbringen auf die Halde zu vermeiden sind. Insofern wird das Rückstandssalz aus der elektrostatischen Trennung entsprechend angefeuchtet. Von diesen 7 % Restfeuchte sind etwa 3 % kristallingebunden, d. h., dass etwa 4 % sich als freie Restfeuchte darstellen, die gravitationsbedingt aus der Halde austritt und einen erheblichen Anteil zum Haldenwasseranteil beiträgt. Geht man davon aus, dass auf die Rückstandssalzhalde jedes Jahr etwa 10 Millionen Tonnen Rückstandssalz aufgehaldet werden, dann ergibt sich ein Haldenwasseranteil allein aufgrund der Restfeuchte von jährlich ca. 300.000 Kubikmeter. Hierbei ist zu berücksichtigen, dass das Haldenwasser als gesättigte Lösung anfällt und eine Dichte von ca. 1,2 gr/cm³ aufweist.

Die der Erfindung zugrunde liegende Aufgabe besteht demzufolge darin den Anfall von Haldenwasser aufgrund der Restfeuchte im Salz zu minimieren, und ggf. vollständig zu unterbinden.

Zur Lösung der Aufgabe wird erfindungsgemäß vorgeschlagen , dass der Anteil des Additivs an der Menge an Rückstandssalz etwa 0,2-4 Masseprozent beträgt. In diesem Zusammenhang hat sich herausgestellt, dass durch die Zugabe von vorzugsweise 0,5 bis 1 Masseprozent an Additiv mit hydraulisch und/oder puzzolanisch abbindenden Eigenschaften, der Restfeuchtegehalt im Rückstandssalz im Wesentlichen vollständig gebunden werden kann. Das heißt, dass beispielsweise 1 kg Braunkohlenfilterasche in Abhängigkeit ihres herkunftsspezifischen Freikalkgehalts zwischen 100 ml und 3l Wasser binden kann. Zum Binden der Restfeuchte von 10 Millionen Tonnen Rückstandssalz wären demzufolge lediglich 100.000 Tonnen Asche erforderlich.

Grundsätzlich stünden natürlich auch andere Möglichkeiten zur Verminderung des Haldenwasseranteils aufgrund der Restfeuchte im Rückstandssalz zur Verfügung. Beispielsweise wäre denkbar, dass Salz vor der Aufhaldung zu trocknen. Allerdings steht dem einerseits der erhebliche Energiebedarf entgegen und auch andererseits die Tatsache, dass ein getrocknetes Salz beim Aufbringen auf die Salzhalde erheblich staubt. Die Folge hiervon wäre, dass das Salz durch den Wind in weitem Umkreis verteilt würde.

Vorteilhafte Merkmale ergeben sich aus den Unteransprüchen.

So ist insbesondere vorgesehen, dass das Additiv überwiegend in schluffiger Form vorliegt. Wie bereits an anderer Stelle erläutert, finden insbesondere Aschen aus der Verbrennung von fossilen Energieträgern insbesondere aus der Braunkohleverbrennung sowie Rückstände aus der Aufbereitung von Stoffen aus Wärmebehandlungs- und Verbrennungsprozessen Verwendung. Gegebenenfalls können auch Gemische aus Additiven der zuvor erwähnten Bestandteile Verwendung finden.

Gegenstand der Erfindung ist ebenfalls die Verwendung eines Gemisches gemäß einem der voranstehenden Ansprüche 1 bis 5, wobei das Additiv des Gemischs hydraulisch und/oder puzzolanisch abbindende Eigenschaften zur Bindung der Restfeuchte in dem Rückstandssalz einer Salzhalde aufweist.

Ebenfalls Gegenstand der Erfindung ist ein Verfahren zur Bindung der Restfeuchte in dem Rückstandssalz einer Salzhalde zur Verminderung des Haldenwasseranteils, das sich durch ein Gemisch gemäß mindestens einem der Ansprüche 1 bis 5 auszeichnet, das auf einer Salzhalde aufgebracht wird. Die Vermischung kann hierbei während des Aufhaldungsprozesses erfolgen, und zwar im Einzelnen dadurch, dass dem auf dem Förderband transportierten Rückstandssalz die entsprechende Menge an Additiv zugeführt wird, wobei die eigentliche intensive Vermischung zwischen Additiv und Rückstandssalz beim Übergeben des Gemisches von einem Förderband zum nächsten erfolgt.

Zusammenfassend seien im folgendem noch einmal die Vorteile der Erfindung dargelegt:
Durch die Beimischung des Additivs zum Rückstandssalz werden zum einen die geomechanischen Eigenschaften des Rückstandes nicht verändert. Das heißt, es findet insbesondere keine Änderung des Schüttwinkels statt. Des Weiteren erfolgt bei der Vermischung des Rückstandssalzes mit dem Additiv aufgrund der hydraulischen und/oder puzzolanischen Eigenschaften eine kristalline Bindung der Restfeuchte. Die allgemeine Reaktionsgleichung lautet hierfür:

Ca(OH)₂ + SiO₂ + H₂O → CaO x SiO₂ + H₂O

## Patentansprüche

1. Gemisch aus Rückstandssalz und einem Additiv zur Bindung der Restfeuchte in dem Rückstandssalz zur Verminderung des Anfalls an Haldenwasser einer Salzhalde,
wobei das Additiv hydraulisch und/oder puzzolanisch abbindende Eigenschaften aufweist,
**dadurch gekennzeichnet,**
**dass** der Anteil des Additives an der Menge an Rückstandssalz etwa 0,2 bis 4 Masseprozent beträgt.

2. Gemisch nach Anspruch 1,
**dadurch gekennzeichnet,**
**dass** das Additiv überwiegend in schluffiger Form vorliegt.

3. Gemisch nach Anspruch 1 oder 2,
**dadurch gekennzeichnet,**
**dass** als Additiv Asche aus der Verbrennung von fossilen Energieträgern insbesondere Braunkohle verwendet wird.

4. Gemisch nach einem der voranstehenden Ansprüche,
**dadurch gekennzeichnet,**
**dass** als Additiv Stoffe wie z. B. Rückstände aus Wärmebehandlungsund Verbrennungsprozessen eingesetzt werden.

5. Gemisch nach einem der voranstehenden Ansprüche,
**dadurch gekennzeichnet,**
**dass** der Anteil des Additivs an der Menge an Rückstandssalz 0,5 bis 1 Masseprozent beträgt.

6. Verwendung eines Gemischs gemäß einem der voranstehenden Ansprüche 1 bis 5, wobei das Additiv des Gemischs hydraulisch und/oder puzzolanisch abbindende Eigenschaften zur Bindung der Restfeuchte in dem Rückstandssalz einer Salzhalde aufweist.

7. Verfahren zur Bindung der Restfeuchte in dem Rückstandssalz einer Salzhalde zur Verminderung des Haldenwasseranteils,
**dadurch gekennzeichnet,**
**dass** ein Gemisch gemäß mindestens einem der voranstehenden Ansprüche 1 bis 5 auf eine Salzhalde aufgebracht wird.

## Claims

1. A mixture of salt residue and an additive for binding the residual moisture in the salt residue to reduce the accumulation of waste water in a salt heap,
wherein the additive having hydraulically and/or pozzolanically setting properties,
**characterized in that** the proportion of the additive in the amount of salt residue is about 0.2 to 4% by mass.

2. The mixture according to claim 1,
**characterized in that**
the additive is predominantly present in silty form.

3. The mixture according to claim 1 or 2,
**characterized in that**
ash from the combustion of fossil fuels, especially lignite, is used as an additive.

4. The mixture according to one of the aforementioned claims,
**characterized in that**
substances such as residues from heat treatment and combustion processes are used as additives.

5. The mixture according to one of the aforementioned claims,
**characterized in that**
the proportion of the additive in the amount of salt residue is 0.5 to 1 % by mass.

6. Use of a mixture according to one of the aforementioned claims 1 to 5, wherein the additive of the mixture has hydraulically and/or pozzolanically setting properties for binding the residual moisture in the salt residue of a salt heap.

7. A method for binding the residual moisture in the salt residue of a salt heap to reduce the waste water content of the heap,
**characterized in that**
a mixture according to at least one of the aforementioned claims 1 to 5 is applied to a salt heap.

## Revendications

1. Mélange de sel résiduel et d'un additif pour fixer l'humidité résiduelle dans le sel résiduel afin de réduire l'accumulation d'eau dans un dépôt de sel,
où l'additif présente des propriétés de prise hydraulique et/ou pouzzolanique,
**caractérisé en ce que** la teneur de l'additif dans la quantité de sel résiduel est d'environ 0,2 à 4% en masse.

2. Mélange selon la revendication 1,
**caractérisé en ce que**
l'additif est principalement sous forme limoneuse.

3. Mélange selon la revendication 1 ou 2,
**caractérisé en ce que**
des cendres provenant de la combustion de combustibles fossiles, en particulier du lignite, sont utilisées comme additif.

4. Mélange selon l'une des revendications précédentes,
**caractérisé en ce que**
des substances telles que des résidus de processus de traitement thermique et de combustion sont utilisées comme additifs.

5. Mélange selon l'une des revendications précédentes,
**caractérisé en ce que**
la teneur de l'additif dans la quantité de sel résiduel est de 0,5 à 1 % en masse.

6. Utilisation d'un mélange selon l'une des revendications 1 à 5 précédentes, où l'additif du mélange présente des propriétés de prise hydraulique et/ou pouzzolanique pour lier l'humidité résiduelle dans le sel résiduel d'un dépôt de sel.

7. Procédé pour lier l'humidité résiduelle dans le sel résiduel d'un dépôt de sel afin de réduire la teneur en eau du dépôt,
**caractérisé en ce qu'**
un mélange selon au moins une des revendications 1 à 5 précédentes est appliqué sur un dépôt de sel.
